# EUROPEAN PATENT APPLICATION

(11) **EP 3 945 742 A1**
(43) Date of publication of application: **02.02.2022**
(21) Application number: 20188849.2
(22) Date of filing: 31.07.2020
(51) Int. Cl.: H04W 72/02, H04W 24/00, H04W 92/18

(54) **SIDELINK DYNAMIC RESOURCE ALLOCATION USING SINGLE SHOT SENSING SUPPORTED BY LOOK-AHEAD INFORMATION**

(71) Applicant: FRAUNHOFER-GESELLSCHAFT zur Förderung der angewandten Forschung e.V., 80686 München (DE)
(72) Inventor: Mohammad Soleymani, Dariush, 91058 Erlangen (DE); Leyh, Martin, 91058 Erlangen (DE); Roth-Mandutz, Elke, 91058 Erlangen (DE); Bhadauria, Shubhangi, 91058 Erlangen (DE); Harounabadi, Mehdi, 91058 Erlangen (DE); Lipka, Dietmar, 91058 Erlangen (DE)
(74) Representative: Schlenker, Julian

(57) **Abstract**

Embodiments provide a transceiver of a wireless communication system, wherein the transceiver is configured to operate in a sidelink in-coverage, out of coverage or partial coverage scenario, in which resources for a sidelink communication are pre-configured by the wireless communication system or allocated or scheduled autonomously by the transceiver, wherein the transceiver is configured to perform a single-shot-sensing on resources of the sidelink prior to a sidelink transmission to another transceiver or multiple other transceivers of the wireless communication system, in order to obtain a sensing information, wherein the transceiver is configured to determine, for said sidelink transmission, a set of candidate resources out of the resources of the sidelink based on the sensing information, wherein the transceiver is configured to select, for said sidelink transmission, resources out of the set of candidate resources and to perform said sidelink transmission using the selected resources, wherein the resources of the sidelink are accessed in the time domain on a slot basis, wherein the transceiver is configured to select the resources out of the set of candidate resources for said sidelink transmission and to be ready to perform said sidelink transmission until an end of a last occurring slot of a sensing window used for said single-shot-sensing.

## Description

The present application concerns the field of wireless communication systems and networks, more specifically to power savings for battery operated UEs when operated in an autonomous or network controlled resource selection mode. Some embodiment relate to sidelink (e.g., NR V2X) dynamic resource allocation using single shot sensing supported by look-ahead information.

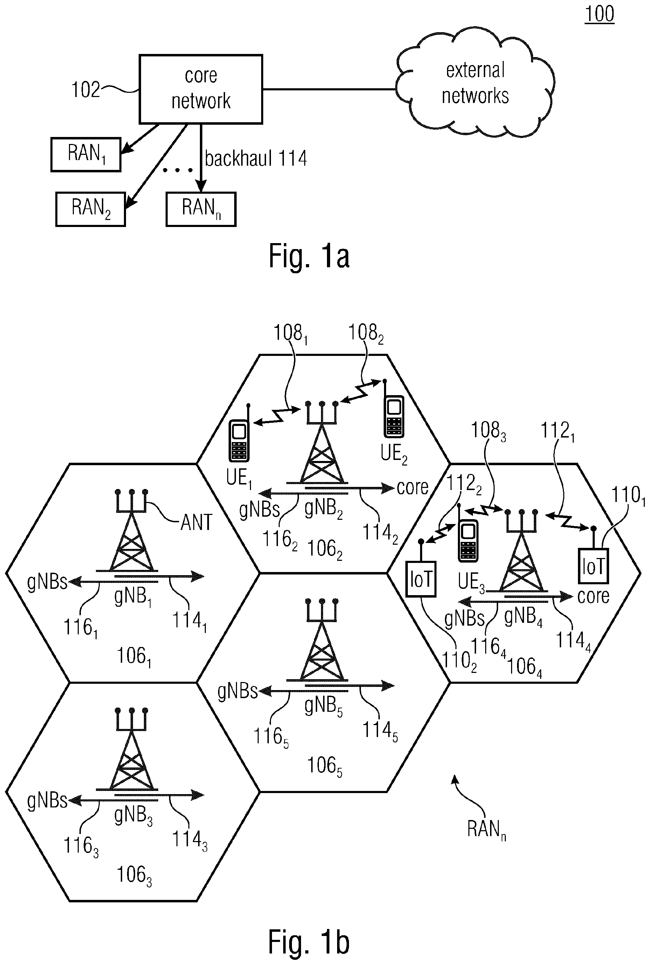

Fig. 1 is a schematic representation of an example of a terrestrial wireless network 100 including, as is shown in Fig. 1(a), a core network 102 and one or more radio access networks RAN₁, RAN₂, ...RAN_{N}. Fig. 1(b) is a schematic representation of an example of a radio access network RANₙ that may include one or more base stations gNB₁ to gNB₅, each serving a specific area surrounding the base station schematically represented by respective cells 106₁ to 106₅. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANN may include more or less such cells, and RANN may also include only one base station. Fig. 1(b) shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. Further, Fig. 1(b) shows two loT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1(b) by the arrows pointing to "core". The core network 102 may be connected to one or more external networks. Further, some or all of the respective base station gNB₁ to gNB₅ may connected, e.g. via the S1 or X2 interface or the XN interface in NR, with each other via respective backhaul links 116₁ to 116₅, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB), the physical downlink shared channel (PDSCH) carrying for example a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels, or more precisely the transport channels according to 3GPP, may further include the physical random access channel (PRACH or RACH) used by UEs for accessing the network once a UE is synchronized and has obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix (CP) length. All OFDM symbols may be used for DL or UL or only a subset, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the NR (5G), New Radio, standard.

The wireless network or communication system depicted in Fig. 1 may by a heterogeneous network having distinct overlaid networks, e.g., a network of macro cells with each macro cell including a macro base station, like base station gNB₁ to gNB₅, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the NR (5G), new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs
- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g. GSM, UMTS, LTE base stations.

When considering two UEs directly communicating with each other over the sidelink, e.g. using the PC5 interface, one of the UEs may also be connected with a BS, and may relay information from the BS to the other UE via the sidelink interface. The relaying may be performed in the same frequency band (in-band-relay) or another frequency band (out-of-band relay) may be used. In the first case, communication on the Uu and on the sidelink may be decoupled using different time slots as in time division duplex, TDD, systems.

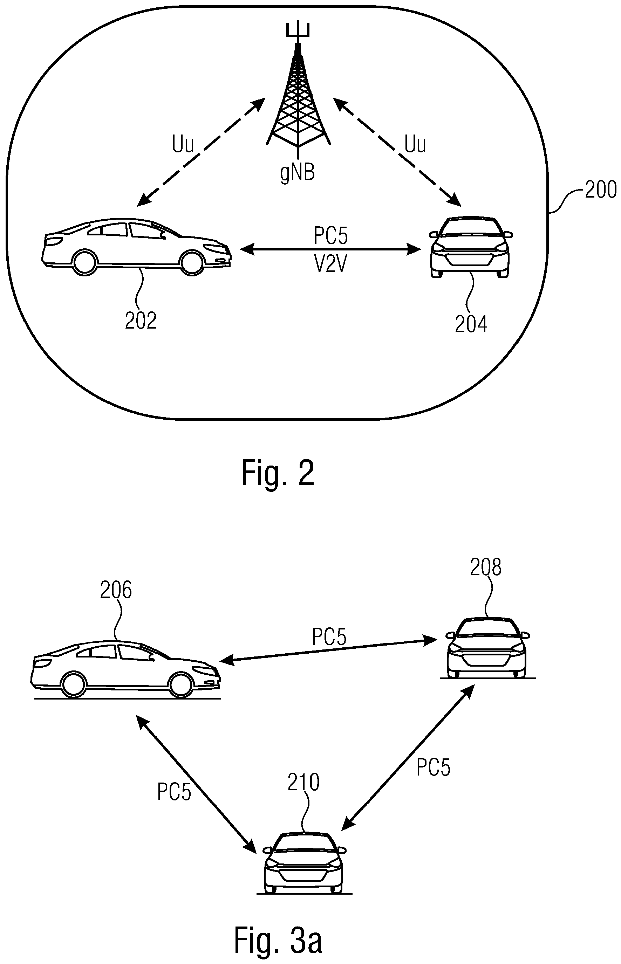

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

Fig. 3a is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3a which is the out-of-coverage scenario does not necessarily mean that the respective mode 2 UEs (in NR) or mode 4 UEs (in LTE) are outside of the coverage 200 of a base station, rather, it means that the respective mode 2 UEs (in NR) or mode 4 UEs (in LTE) are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the NR mode 1 or LTE mode 3 UEs 202, 204 also NR mode 2 or LTE mode 4 UEs 206, 208, 210 are present.

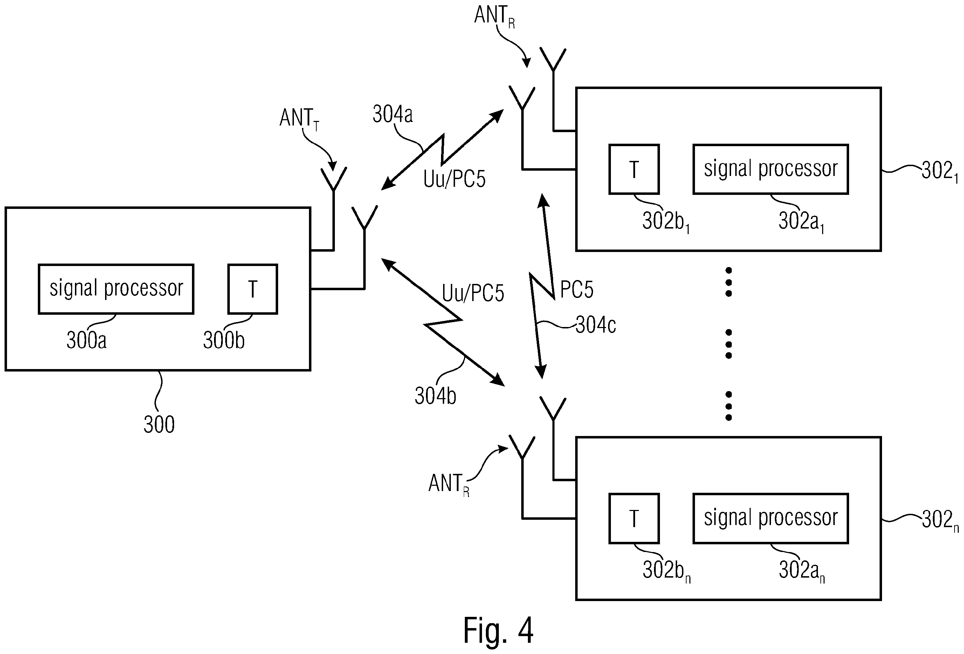

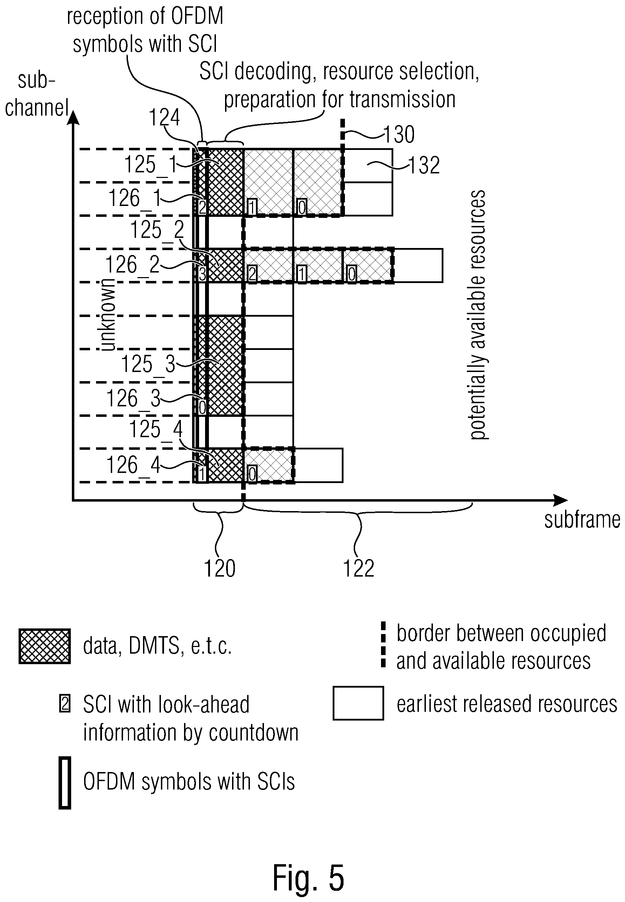

Naturally, it is also possible that the first vehicle 202 is covered by the gNB, i.e. connected with Uu to the gNB, wherein the second vehicle 204 is not covered by the gNB and only connected via the PC5 interface to the first vehicle 202, or that the second vehicle is connected via the PC5 interface to the first vehicle 202 but via Uu to another gNB, as will become clear from the discussion of Figs. 4 and 5.

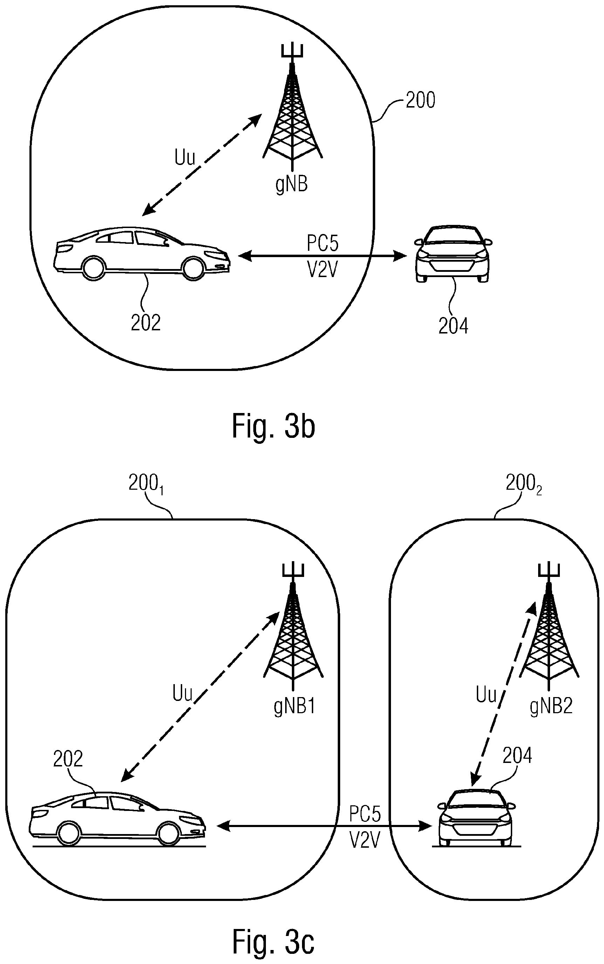

Fig. 3b is a schematic representation of a scenario in which two UEs directly communicating with each, wherein only one of the two UEs is connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204, wherein only the first vehicle 202 is in the coverage area 200 of the base station gNB. Both vehicles 202, 204 are connected directly with each other over the PC5 interface.

Fig. 3c is a schematic representation of a scenario in which two UEs directly communicating with each, wherein the two UEs are connected to different base stations. The first base station gNB1 has a coverage area that is schematically represented by the first circle 200₁, wherein the second station gNB2 has a coverage area that is schematically represented by the second circle 200₂. The UEs directly communicating with each other include a first vehicle 202 and a second vehicle 204, wherein the first vehicle 202 is in the coverage area 200₁ of the first base station gNB1 and connected to the first base station gNB1 via the Uu interface, wherein the second vehicle 204 is in the coverage area 200₂ of the second base station gNB2 and connected to the second base station gNB2 via the Uu interface.

The autonomous resource selection method of NR V2X sidelink transmission mode 2 consists of a sensing and a resource selection phase delimited by corresponding time windows. The resource selection is further split into two steps:
1. Identification of candidate resources within the resource selection window; and
2. Resource selection for initial as well as re-transmission of a transport block (TB) from the identified candidate resources.

Compared to LTE V2X mode 4 the sensing is shorter but still in the order of 100 ms and essentially continuous, i.e., the sensing window is moving. The long sensing duration may cause high power consumption which is a problem for battery-powered UEs. Partial sensing is proposed to address this problem, however, this essentially reduces RSSI and RSRP measurements while in NR the SCI reception and decoding must be ongoing to cope with aperiodic traffic. In other words, this issue already persisting in LTE V2X mode 4 has not yet been solved in NR V2X mode 2.

Resource selection involves not only the physical but also higher layers. This process could be implemented, for example, as follows:
1. The physical layer provides the sensing results to the upper layer;
2. The higher layer selects the resource for the initial transmission carrying the reservation(s);
3. The higher layer signals the selected radio time resources to the physical layer;
4. The physical layer receives the selection parameters of resources from the higher layer to reserve them;
5. Possibly, it receives a small TB from the higher layer, if the PSSCH shall be used for an initial transmission. Note that a reservation directly after resource selection is always an initial transmission;
6. Preparation, formatting and transmission of the PSCCH and PSSCH on the selected resources.

Especially, the involvement of higher layers and signaling between the layers cause longer latency that not only delays the delivery of packets but also increases the risk of collisions since the sensing information becomes more outdated the longer the gap between sensing and transmission is. For example in [2] minimum desired values are stated for the processing times *T*_{*proc,*0} (time between the end of sensing window and resource selection trigger) and *T*_{*proc,*1} (maximum time between (re)selection trigger and start of selection window) with 0.5 ms and 1 ms, respectively. Depending on the numerology, 15, 30, 60 or 120 KHz the sum of these values of 1.5 ms together with additional time needed for slots alignment causes a latency between the last sensing slot and transmission of at least 3, 4, 7 or 13 slots, respectively. Since any transmission of a reservation of another UE during that time cannot be recognized in time, even if sensing is continued in the gap, a collision cannot be avoided if these reservations are overlapping, unless it is sufficiently far in the future that a pre-emption is possible.

Due to non-periodic traffic in NR V2X, the prediction of the behavior of other UEs is not possible. Though the resource reservation agreed for NR V2X mode 2 can indeed reduce the collision probability, however, the latency between sensing and resource selection yields more sensing results that are outdated which in turn increases the collision probability again, as explained above.

A known solution is specified on 3GPP RAN1. The corresponding options are described in the first proposal in section 7.2.4.2.2 of [1]. The final stage of 5G V2X in release 16, as specified in [3] chapter 16 and [4] chapter 8, is denoted as known in the following.

The problems with the known solution is the time continuous sensing required to analyze the pattern of resources occupied by other UEs. The sensing procedure causes a high power consumption at the UE.

The sensing result is the basis to predict and decide which resources are available in the future, i.e. not occupied by others. However, before resource selection and transmission, some time passes due to timing windows provided for the physical layer processing after sensing, so called T_{proc,0} and multiple signaling between layer 1 and layer 2 during so called T_{proc,1} as described in the example procedure above. As a consequence, the sensing information becomes more and more outdated which increases the collision probability as described above.

It is noted that the information in the above section is only for enhancing the understanding of the background of the invention and therefore it may contain information that does not form prior art that is already known to a person of ordinary skill in the art.

Starting from the above, there is a need for improvements or enhancements with respect to power savings for battery operated UEs especially when operated in an autonomous resource selection mode.

Starting from the above, there is further the need for improvements or enhancements with respect to a reduction of a collision probability and with respect to an improvement of a reliability and latency, especially in highly congested scenarios.

Starting from the above, there is furthermore the need for improvements or enhancements with respect to improving the efficiency of the resource pool usage.

Embodiments of the present invention are now described in further detail with reference to the accompanying drawings:
- Fig. 1: shows a schematic representation of an example of a wireless communication system,
- Fig. 2: is a schematic representation of an in-coverage scenario in which UEs directly communicating with each other are connected to a base station,
- Fig. 3a: is a schematic representation of an out-of-coverage scenario in which UEs directly communicating with each other receive no SL resource allocation configuration or assistance from a base station,
- Fig. 3b: is a schematic representation of a scenario in which two UEs directly communicating with each, wherein only one of the two UEs is connected to a base station,
- Fig. 3c: is a schematic representation of a scenario in which two UEs directly communicating with each, wherein the two UEs are connected to different base stations,
- Fig. 4: is a schematic representation of a wireless communication system including a base station and one or more transceivers, like user devices, UEs,
- Fig. 5: shows in a diagram an occupation of resources of the wireless communication network during a sensing window of the single shot sensing based on which the transceiver determines a sensing information describing free resources and/or occupied resources in a following transmission window, in accordance with a first exemplary embodiment,
- Fig. 6: shows in a diagram an occupation of resources of the wireless communication network during a sensing window of the single shot sensing based on which the transceiver determines a sensing information describing free resources and/or occupied resources in a following transmission window, in accordance with a second exemplary embodiment,
- Fig. 7: shows in a diagram an occupation of resources of the wireless communication network during a sensing window of the single shot sensing based on which the transceiver determines a sensing information describing free resources and/or occupied resources in a following transmission window, in accordance with a third exemplary embodiment, and
- Fig. 8: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned.

As indicated above, there is a problem of the high power consumption for battery operated UEs, for example, Vulnerable Road Users (VRUs), e.g. pedestrians, cyclists, stroller, e.t.c. equipped with battery operated P-UEs (pedestrian UEs) using V2X applications. These pedestrian UEs (P-UEs) are usually depending on their UEs battery only, different to vehicle mounted vehicular UEs (V-UE). Therefore, for P-UEs battery saving for V2X communication is essential to guarantee continuous V2X application support. One continuously energy consuming V2X procedure for the UE is sensing in autonomous resource selection mode.

As further indicated above, there is further the problem of a high collision probability and reduced reliability and latency, especially in highly congested scenarios.

As further indicated above, there is furthermore the problem of the usage of the resource pool. For example, the current specification includes reservation of multiple resources in anticipation of retransmissions. If they are not needed since the initial transmission was successful they are blocked and wasted. Indeed, a pre-emption mechanism is specified, but it may not be received by other devices and also consume resources themselves.

The present invention provides approaches for improving the sensing procedure of battery operated UEs, for example, VRU-UEs, such as P-UEs, so as to provide, for example, improvements, for example, in terms of power consumption, flexibility, complexity, forward compatibility, overhead, latency, robustness, reliability.

Further, the present invention provides approaches for reducing or even (minimizing) the collision probability and thus improving the reliability and latency in highly congested scenarios.

Furthermore, the present invention provides approaches for improving the efficiency of the resource pool usage, i.e. channel capacity.

Embodiments of the present invention may be implemented in a wireless communication system as depicted in Fig. 1, Fig. 2, and Figs. 3a-c including base stations and users, like mobile terminals or loT devices. Fig. 4 is a schematic representation of a wireless communication system including a central transceiver, like a base station, and one or more transceivers 3021 to 302n, like user devices, UEs. The central transceiver 300 and the transceivers 302 may communicate via one or more wireless communication links or channels 304a, 304b, 304c, like a radio link. The central transceiver 300 may include one or more antennas ANTT or an antenna array having a plurality of antenna elements, a signal processor 300a and a transceiver unit 300b, coupled with each other. The transceivers 302 include one or more antennas ANTR or an antenna array having a plurality of antennas, a signal processor 302a1, 302an, and a transceiver unit 302b1, 302bn coupled with each other. The base station 300 and the UEs 302 may communicate via respective first wireless communication links 304a and 304b, like a radio link using the Uu interface, while the UEs 302 may communicate with each other via a second wireless communication link 304c, like a radio link using the PC5 interface. When the UEs are not served by the base station, are not be connected to a base station, for example, they are not in an RRC connected state, or, more generally, when no SL resource allocation configuration or assistance is provided by a base station, the UEs may communicate with each other over the sidelink. The system, the one or more UEs and the base stations may operate in accordance with the inventive teachings described herein.

Embodiments provide a transceiver of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are pre-configured by the wireless communication system or allocated or scheduled autonomously by the transceiver, wherein the transceiver is configured to perform a single-shot-sensing on resources of the sidelink prior to a sidelink transmission to another transceiver or multiple other transceivers of the wireless communication system, in order to obtain a sensing information, wherein the transceiver is configured to determine, for said sidelink transmission, a set of candidate resources [e.g., one or more candidate resource elements] out of the resources of the sidelink based on the sensing information, wherein the transceiver is configured to select, for said sidelink transmission, resources out of the set of candidate resources and to perform said sidelink transmission using the selected resources, wherein the resources of the sidelink are accessed in the time domain on a slot basis, wherein the transceiver is configured to select the resources out of the set of candidate resources for said sidelink transmission and to be ready to perform said sidelink transmission until an end of a last occurring [e.g., most recent] slot of a sensing window used for said single-shot-sensing.

In embodiments, the sensing window of the single-shot-sensing extends over a single slot.

In embodiments, the sensing window of the single-shot-sensing extends over a plurality of slots [e.g., two or more slots] immediately following each other.

In embodiments, the transceiver is configured to start the sidelink transmission in a slot immediately following the last slot of the sensing window.

In embodiments, the set of candidate resources lay within a transmission window, wherein a first occurring slot of the transmission window immediately follows the last slot of the sensing window.

In embodiments, the transmission window extends over a single slot.

In embodiments, the transmission window extends over a plurality of slots [e.g., two or more slots] immediately following each other.

In embodiments, the sensing information obtained by performing the single-shot-sensing completely describes all resources of the transmission window that are reserved by other transceivers of the wireless communication network.

In embodiments, the transceiver is configured to perform the single-shot-sensing by means of receiving and decoding sidelink control information transmitted by other transceivers of the wireless communication network in the slots of the sensing window.

In embodiments, the sidelink control information transmitted in a respective slot comprises a resource occupation signaling information signaling [e.g. a number of] slots immediately following the respective slot that are occupied by another transceiver of the wireless communication system.

In embodiments, the sidelink control information transmitted in a respective slot comprises a resource reservation signaling information signaling slots and/or sub-channels reserved by another transceiver of the wireless communication system.

In embodiments, the transceiver is configured to complete the decoding of the sidelink control information until the end of the last occurring [e.g., most recent] slot of the sensing window.

In embodiments, the transceiver is configured to exploit a fast decoding of the [e.g., first stage] sidelink control information transmitted by one or more [e.g., all] other transceivers of the wireless communication network decoding [e.g., to perform multiple polar decoding, control information parsing, e.t.c.], such that the decoding of the sidelink control information is completed until the end of the last occurring [e.g., most recent] slot of the sensing window.

In embodiments, the transceiver is configured to perform [e.g. to execute an algorithm that performs] at least one out of [e.g., one, two or all out of]
- the single-shot-sensing,
- the determining the set of candidate resources, and
- the selecting of the resources out of the candidate resources
in a physical layer [e.g., of the open systems interconnection model].

In embodiments, the set of candidate resources are a set of candidate resource blocks, wherein the selected resources are selected resources blocks, each resource block being defined as a single slot in the time domain and a single sub-channel in the frequency domain.

In embodiments, the transceiver is configured to select, for said sidelink transmission, the resource blocks out of the set of candidate resource blocks dynamically in dependence on the set of candidate resource blocks and a data size of said sidelink transmission, such that the selected resource blocks are distributed over both, two or more slots in the time domain and two or more sub-channels in the frequency domain.

In embodiments, the transceiver is configured to transmit, when transmitting the sidelink transmission, a resource occupation signaling information in each slot that is occupied by the selected resources, the resource occupation signaling information signaling a number of immediately subsequent slots in the time domain that are also occupied by the selected resources.

For example, the transceiver can be configured to transmit, when transmitting the sidelink transmission, resource occupation signaling information in each selected resource block, the resource occupation signaling information signaling a number of selected resource blocks immediately following the respective resource block in the time-domain.

In embodiments, the transceiver is configured to transmit the resource occupation signaling information via the sidelink control information.

In embodiments, the transceiver is a UE.

In embodiments, the transceiver is battery operated.

Further embodiments provide a method for operating a transceiver of a wireless communication system, the method comprising: operating the transceiver in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are pre-configured by the wireless communication system or allocated or scheduled autonomously by the transceiver; performing a single-shot-sensing on resources of the sidelink prior to a sidelink transmission to another transceiver of the wireless communication system, in order to obtain a sensing information; determining, for said sidelink transmission, a set of candidate resources [e.g., one or more candidate resource elements] out of the resources of the sidelink based on the sensing information; selecting, for said sidelink transmission, resources out of the set of candidate resources and to perform said sidelink transmission using the selected resources; wherein the resources of the sidelink are accessed in the time domain on a slot basis; wherein the resources are selected out of the set of candidate resources for said sidelink transmission and the transceiver is ready to perform said sidelink transmission until an end of a last occurring [e.g., most recent] slot of a sensing window used for said single-shot-sensing.

Further embodiments provide a computer program for performing the method according to one of the herein described embodiments, when the computer program runs on a computer, microprocessor or software defined radio.

Further embodiments provide an algorithm for performing the method according to one of the herein described embodiments, when the algorithm runs on a dedicated hardware, hardware accelerator or configurable hardware.

Embodiments of the present invention, as mentioned above, provide improvements and enhancements of the partial sensing procedure of battery operated UEs, for example, VRU-UEs, such as P-UEs, as it may be employed in NR sidelink communications, like V2X communications (e.g., NR V2X transmission mode 2) or the like. In the following, several aspects of the present invention are described which provide for enhancements with regard to at least one out of power consumption, flexibility, complexity, forward compatibility, overhead, specification impact, latency and robustness. The subsequently described aspects may be used independently from each other or some or all of the aspects may be combined.

In accordance with embodiments, further improvements can be achieved by implementing one or a combination of two or more of the following options:
1. Exploiting fast decoding of 1^{st} stage SCI and possibly 2^{nd} stage SCI such that the time between the end of the sensing window and the resource selection trigger T_{proc,0} is 0 slots, i.e. decoding is completed within the same slot where the SCI arrives over the air.
2. Optionally, moving resource selection algorithms from upper layers to the physical layer avoiding time consuming back and forth signaling and exclude asynchronous processing in higher layers. By that achieving that the maximum time between (re)selection trigger and start of selection window T_{proc,1} is 0 slots such that the resource selection is completed within the same slot where the SCI arrives over the air and the UE is ready to transmit in the next slot. The algorithm could be kept in upper layers if it achieves the requirement for T_{proc,1} = 0.
3. Flexible resource shaping in time and frequency domain. That means, one or multiple transport blocks (e.g., minimum resource blocks) can be transmitted within one slot distributed over multiple subchannels or in one subchannel but distributed over multiple slots or any suitable combination of number of slots and subchannels.
4. Reduction of the so called window W, which sets the maximum time span within a resource reservation and all corresponding reserved resources must occur.
5. Beside resource reservation, a new type of look-ahead information can be added (more details further below in section 4) to support the flexible resource shaping which is preferably mapped on any stage of SCI. The look-ahead information and reduced window W allows a single shot sensing for resource selection. That means a UE does not need to rely on continuous sensing. In principle, it can wake up any time and a sensing time of a few slots or even only one slot is sufficient to gain the full picture of the resource occupation announced by all other UEs, if the sensing window and the window W within all resource reservations corresponding reserved resources must occur are selected as described in section 5 below.
6. Support resource selection without resource reservation by adding look-ahead information into SCI that also publishes the intention for resource occupation of a corresponding transmitting UE in another way. In other words, each UE is obliged to set this information in its SCI. In the exemplary embodiment 1 described in section 2.1 the resource selection shall be supported without resource reservation, i.e. resource reservation is not allowed at all.

Subsequently, detailed embodiments of the present invention are described.

Thereby, in section 1 different options are described that allow for fast decoding and single shot sensing. These different options can be implemented by themselves or at least two of these options can be combined with each other.

Afterwards, in section 2, exemplary embodiments are described. Specifically, in section 2.1., exemplary embodiment 1 is proposed, which provides fast decoding and single shot sensing and does not allow resource reservation. In section 2.2., exemplary embodiment 2 is proposed, where the look-ahead information to support the flexible resource shaping may be combined with state of the art frequency and time assignment of a resource reservation. In section 2.3. exemplary embodiment 3 is described that uses only state of the art reservation, however, implementing all options from above to realize single shot sensing.

Note that exemplary embodiment 3 provides fast decoding and single shot sensing. Thereby, in embodiments, direct resource selection without prior reservation is not excluded. However, for perfect prediction of resource availability, in embodiments, resource reservation always can be used by all UEs. Thus, this is the preferred selection mechanism of exemplary embodiment 3. Resource selections without prior reservation introduce an element of unpredictability that deteriorates the collision probability and thus should be avoided.

Note that in embodiments, "sensing" is essentially defined as the decoding of the control channel SCI and retrieving its information. Thereby, RSSI and RSRP measurements may still be part of sensing as additional metrics for assessment of the sensing result.

### 1. Supporting options

### 1.1. Fast SCI decoding

Today's chip technologies enable extreme fast signal processing which is crucial for NR. The new numerologies with higher sub-carrier spacing have shorter slot lengths. For example, µ=3 with 120 KHz sub-carrier spacing has a slot length of only 125 µs. µ=4 is even more challenging.

Use cases like self-contained slots require extremely fast processing. NR would not be realistic if modern chip technologies do not conform to that.

In NR R16.0, it was agreed to apply polar channel coding for the control information. A hardware implementation of a polar decoder can be realized such that it needs, for example, <600 cycles.

In accordance with embodiment, clock rates of >1GHz are possible so that a polar decoding can be processed in about 0.6 µs. Including parsing of the information elements and channel estimation it should be below 1 µs. Assuming a decoding capability of maximum 20 SCIs the information elements of all SCIs can be available within 20 to 30 µs. That means, T_{proc,0} = 0 is achievable still leaving margin for T_{proc,1}.

### 1.2 Fast resource selection

To speed up the procedure, in accordance with embodiments, the resource selection can be moved to the physical layer such that the sensing result needs not be sent to the higher layer. Thus, back and forth signaling is avoided.

In accordance with embodiments, the resource selection process can be as follows:
1. Sensing is triggered by higher layers in conveying.
   1.1. Resource selection parameters for transmission of a transport block (TB) (preferred solution),
   1.2. and/or information for resources reservation (optional or for backward compatibility).
2. The physical layer may start a single shot sensing, which is explained below.
3. The higher layers possibly provide a TB. Note that in a preferred solution a TB is always provided, either for initial or re-transmission. In case of a resource reservation the transmission my contain a small TB for initial transmission or an empty PSSCH.
4. In the last slot of the sensing procedure, the physical layer selects a resource as soon as it has decoded the SCIs of the other UEs and prepares the PSCCH for transmission.
5. Transmission of the PSCCH and possibly PSSCH on the selected resource in the slot may be performed directly after the last sensing slot.

This procedure is considerably faster than in prior art due to the following methods:
- Signaling flows may be in one direction only, i.e. from higher to physical layer without any feedback.
- All processing on the physical layer may only be started when the essential information from the higher layer is available, for example as shown in Table 1 below.

In some embodiments, the "resource selection parameters" mentioned in step 1.1. do not mean to include the resource allocation, this is determined in the resource selection step 4. These parameters rather comprise information to determine size and radio parameters, like transport block size, modulation and coding scheme, e.t.c. and information for the resource shaping described in option 3 above. The latter may be based on measurements like PC5 specific measurements of traffic load, density or congestion.

In some embodiments, a pre-requisite may be fast signal processing. Sensing is essentially equivalent to reading SCI. In the slot where sensing ends (in a preferred solution it may be a single slot) SCI decoding, resource selection and packet formatting is preferred to be completed such that transmission may be done in the subsequent slot.

In accordance with embodiments, single shot sensing means, that the UE may wake up at an arbitrary time for a single sensing event. Regular and continuous sensing is not needed. Indeed in practice, a UE usually will wake up periodically for other reasons as to listen for messages. However, it can ad hoc initiate a transmission independently. For example, a UE may wake up as per its DRX configuration provided by the higher layers, e.g. the RRC if the DRX is optionally activated for the UE, and does not need any sensing information from previous DRX cycles. Any asynchronous wake-up trigger, e.g. switching on the UE, switching to mode 2 after losing coverage or any other kind of trigger that might be introduced in the future are supported by single shot sensing.

The following Table 1 provides a possible implementation of information elements configuring a sensing of a common transmission resource pool. Thereby, the marked section describes an example of a new information element to support one-shot sensing.

### CommTxPoolSensingConfig information element

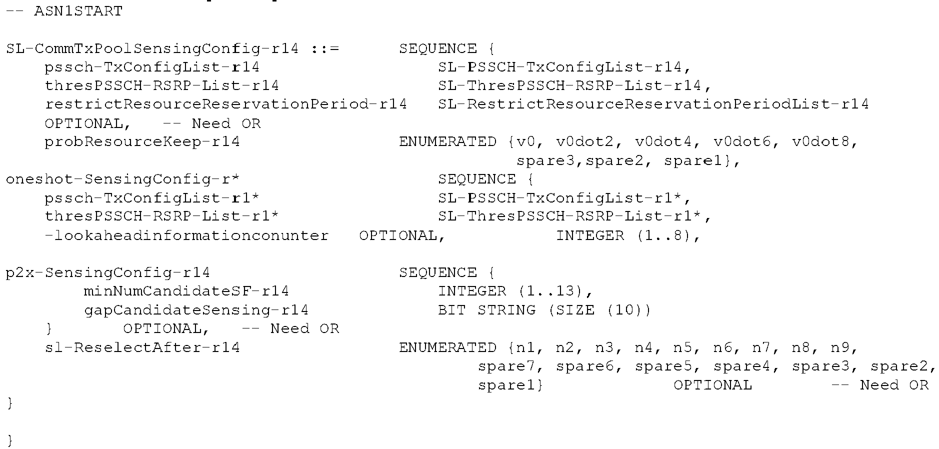

### 1.3 Flexible resource shaping

The smallest possible, i.e. atomic, resource is defined by one sub-channel and one slot (= minimum resource block). Conventionally, sub-channels in only one slot are aggregated to accommodate transport blocks of bigger size. In other words, atomic resources are only aggregated in the frequency domain.

In accordance with embodiments, flexible resource shaping is supported. Flexible resource shaping means that resource aggregation is possible in time and frequency domain. That means, one or multiple-transport blocks can be transmitted within one slot distributed over multiple subchannels or in one subchannel but distributed over multiple slots or any suitable combination of number of slots and subchannels.

This simplifies the resource selection decision since it provides an additional dimension to adapt to any number of consecutive free subchannels, which is influenced by the density of traffic. For example, it is easier to find free resources the lower the number of sub-channels is thus reducing the probability of collisions. Consequently, resource shaping is an instrument to adapt to the density of traffic. For example, if the resource occupation is sparse aggregation in the frequency domain can be preferred, if it is crowded aggregation in the time domain is better.

### 1.4 Look ahead information

In accordance with embodiments, the look-ahead information provides an improved (e.g., accurate as possible) preview of the resource occupation pattern in the near future. To reduce (or even minimize) the collision probability it supports a new (e.g., much faster) procedure for resource selection described in section 1.2.

With state of the art resource reservation one type of look ahead information already exists. To support flexible resource shaping, in accordance with embodiments, a new type of look ahead information is proposed. This can be very compact requiring a few bits in SCI stage 1 or stage 2 for, e.g., a countdown that indicates how long in the near future the resource will be kept by the corresponding UE, wherein the number of bits can be (pre-)configured by the higher layer signaling, e.g., RRC signaling. Fig. 5 below illustrates the example of a countdown value. In this example, the number of bits sets the planning horizon. If, for example, 3 bits are used and the resource will be kept for longer than 8 slots, the counter stays constant at its maximum value 7 and counts-down if the occupation is <8 slots, accordingly. The value 0 indicates that the resource will be free at the next slot and can be selected by another UE.
For other applications, the counter can be extended by additional bits or a dedicated counter to indicate when the corresponding UE plans to resume the resource.

Naturally, in embodiments, also other kinds of look-ahead information might be defined.

### 1.5 Window W reduction

In accordance with embodiments, the maximum time span within a resource reservation and all corresponding reserved resources, known as window W, is reduced, thereby reducing the sensing time and thus saving power. In some embodiments, the window W should be as short as possible but may depend on factors like QoS, i.e. priority of transmission, as well as on the traffic type. Therefore, in some embodiments, a configuration by higher layer signaling might be required, e.g., by RRC through IE SL-ResourcePool with a new information element:

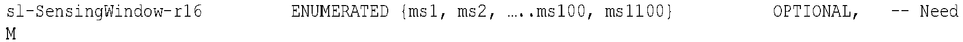

If selecting the smallest possible window size W=1, i.e. only one slot, transmission must be done in the next slot after sensing. When reading the SCIs in this slot all information about resource occupation are present for resource selection by the look-ahead information. This is a true single shot sensing in a single slot. As consequence, this use case excludes resource reservation.

In context of exemplary embodiment 3 (see section 2.3) a shortened sensing of a duration equal to the window size W>1 would likewise yield the complete information about resource occupation by resource reservation and look-ahead information. This use case combines the look-ahead information with and includes resource reservation.

### 2. Resource selection procedures

In accordance with embodiments, at least two of the options described in section 1 can be combined (e.g., in different ways) to specify solutions for different resource selection procedures, as will become clear from the subsequently described exemplary embodiments.

### 2.1 Exemplary embodiment 1

In accordance with this embodiment, resource reservation is not allowed. That means any time a UE needs to select a resource for transmission it has to compete for a new one and selects it at the earliest possible opportunity (can be the very next slot) without further delay by an intermediate reservation. This ensures lowest latencies, reduces the collision probability and optimizes resource utilization. With the steadily new selected resources, an inherent frequency hopping effect is achieved. As additional advantage, procedures like preemption become obsolete.

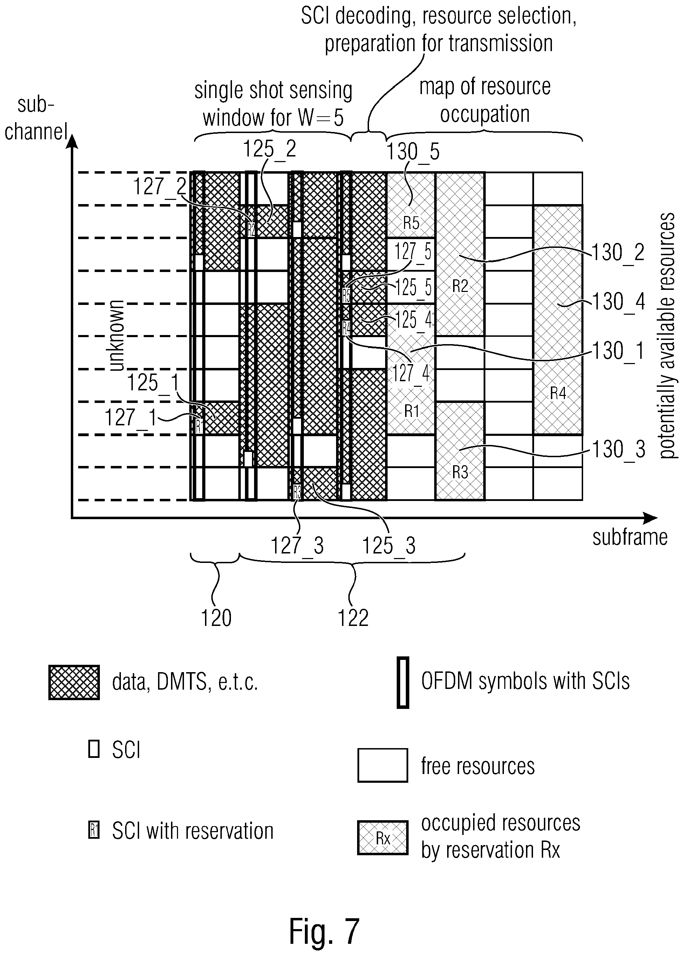

Fig. 5 shows in a diagram an occupation of resources of the wireless communication network during a sensing window 120 of the single shot sensing based on which the transceiver determines a sensing information describing free resources and/or occupied resources in a following transmission window 122 (single shot sensing supported by look-ahead information). Thereby, the ordinate denotes the sub-channels and the abscissa the slots. As indicated in Fig. 7, the sidelink control information 126_1-126_4 transmitted, e.g., at a beginning of a respective slot 125_1-125_4, signals a number of slots immediately following the respective slot that are occupied by a transceiver of the wireless communication system. For example, the sidelink control information 126_1 transmitted in slot 125_1 signals that the immediately following 2 slots are occupied, wherein the sidelink control information 126_2 transmitted in slot 125_2 signals that the immediately following 3 slots are occupied, wherein the sidelink control information 126_3 transmitted in slot 125_3 signals that the immediately following 0 slots are occupied, and wherein the sidelink control information 126_4 transmitted in slot 125_4 signals that the immediately following 1 slots are occupied.

In other words, Fig. 5 illustrates an embodiment without resource reservation. The box 124 represents the OFDM symbols within a single slot with the SCIs of all transmitting UEs. That means, W=1, i.e. only one slot. As a consequence, this use case excludes resource reservation.

In other words, a regular sensing like in partial sensing is not needed. In an extreme example, a UE may be inactive for an arbitrary time and only one period of, i.e. single shot, sensing in one slot is sufficient to obtain all information for a resource selection decision. In reality, a UE repeatedly or periodically will scan for messages, like CAM for discovery. The sensing and resource selection procedure, however, can in principle be done independently of other procedures. On the other hand for power saving any wake-up opportunity should be used to execute as many as possible procedures at the same time. As example, if the UE wakes up to scan for messages it is beneficial to execute sensing, selection and transmission as much as possible in parallel.

Decoding the SCIs in this slot to obtain the look-ahead information, represented by a countdown value, publishes the complete pattern of occupied sub-channels in the near future. The green line 130 marks the border between occupied and free resources 132.

Collisions can be classified by two categories, collisions with an ongoing transmission and on free resources. Ongoing transmission occurs if it is started in slots that are covered by sensing, for example in the gap between sensing and resource selection. With the look-ahead information a collision with ongoing transmission is eliminated if a UE selects free resources from the first slot after the green border (W=1). This requires fast SCI decoding and resource selection (see sections 1.1 and 1.2) such that W=1 can be configured.

In the ideal case, all UEs have the same information. However, since the UEs have no chance to know the decision on the resource selection of the other UEs collisions on free resources may occur. This cannot be avoided with any kind of method. Note that state of the art resource selection suffers from collision with ongoing transmission due to the longer time between sensing and resource selection.

Since no reservation is allowed no pre-emption is possible and a UE always tries to select resources that are available the question arises if the priority field in SCI is needed. A possible use case is, if under high load on the resource pool a high priority transmission is forced to select an occupied resource it could interfere with high power and let the interfered lower priority signal retransmit. On the other hand resource shaping helps to avoid the need for occupied resources.

### 2.2 Exemplary embodiment 2: Combination of exemplary embodiment 1 with conventional resource reservation

In accordance with embodiments, the look-ahead information, e.g. represented by a countdown, can be combined with the resource reservation mechanism of rel. 16 NR V2X. This may be required for backward compatibility. Resource reservation and the look-ahead information can both be regarded as look-ahead, since both inform about the intention of a UE regarding resource occupation in the subsequent slots.

Resource reservation cannot be done with W=1 since the resource reservation must be transmitted before the reserved resource is used for data transmission. So, at least two slots are needed. A shortened sensing of a duration equal to a window size W>1 would likewise yield the complete information about resource occupation by resource reservation and look-ahead information.

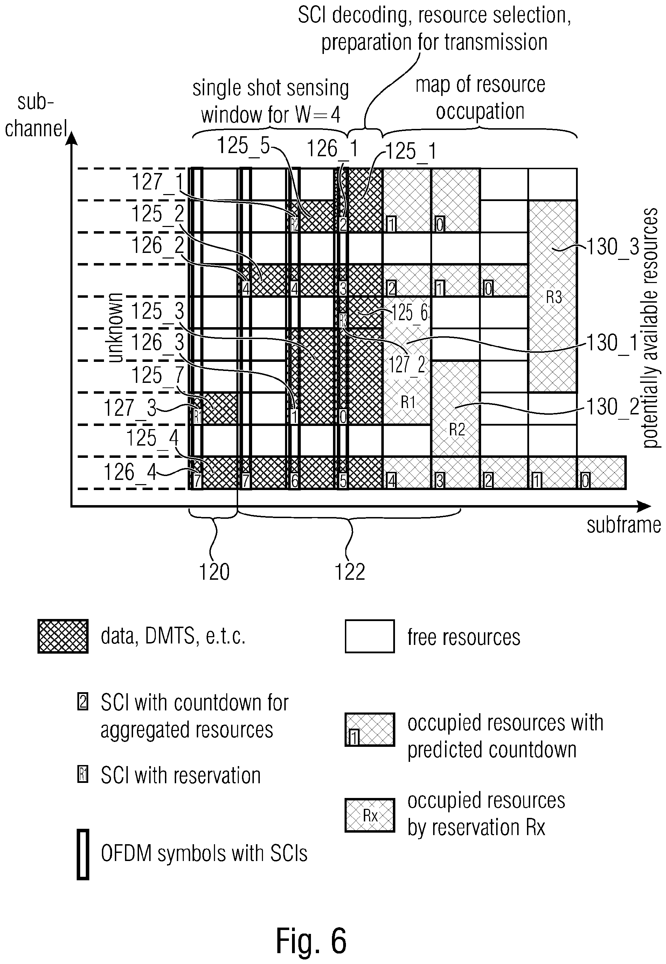

This use case which combines the look-ahead information with and includes resource reservation is illustrated in Fig. 6 assuming W=5. Note that the slot with the reservation information is included in W, so that sensing spans over W-1. Since all resource selections are fulfilled latest W-1 slots after the slot with the reservation information, a single shot sensing with window size of W-1 is sufficient to obtain the complete occupation pattern over the next slots.

In detail, Fig. 6 shows in a diagram an occupation of resources of the wireless communication network during a sensing window 120 of the single shot sensing based on which the transceiver determines a sensing information describing free resources and/or occupied resources in a following transmission window 122 (single shot sensing supported by look-ahead information with resource reservation). Thereby, the ordinate denotes the sub-channels and the abscissa the slots.

As indicated in Fig. 6, the sidelink control information 126_1-126_4 transmitted, e.g., at a beginning of a respective slot 125_1-125_4 signals a number of slots immediately following the respective slot that are occupied a transceiver of the wireless communication system. For example, the sidelink control information 126_1 transmitted in slot 125_1 signals that the immediately following 2 slots are occupied, wherein the sidelink control information 126_2 transmitted in slot 125_2 signals that the immediately following at least 4 (in total 5) slots are occupied, wherein the sidelink control information 126_3 transmitted in slot 125_3 signals that the immediately following 1 slot is occupied, and wherein the sidelink control information 126_4 transmitted in slot 125_4 signals that the immediately following at least 7 (in total 8) slots are occupied.

Additionally, the sidelink control information 127_1-127_3 transmitted, e.g., at a beginning of a respective slot 125_5-125_7 signals resources that are reserved by a transceiver of the wireless communication system. For example, the sidelink control information 127_1 transmitted in slot 125_5 signals that resources 130_1 (R1) are reserved, wherein the sidelink control information 127_2 transmitted in slot 125_6 signals that resources 130_2 (R2) are reserved, and wherein the sidelink control information 127_3 transmitted in slot 125_7 signals that resources 130_3 (R3) are reserved.

As for the exemplary embodiment 1 (see section 2.1) fast SCI decoding and resource selection (see sections 1.2 and 1.2) is mandated, i.e. the ability to send a resource reservation in the next slot after sensing. Otherwise, collisions with ongoing transmission may occur.

Note that it is possible that a resource selection aggregated over time persists after the map of occupation. This is not a problem since the look-ahead information gives a precise information how far the occupation is prolonged beyond W-1. This situation is illustrated in the bottom subchannel in Fig. 6, assuming 3 bits for the look-ahead countdown.

### 2.3 Exemplary embodiment 3: Single shot sensing with conventional resource reservation

In accordance with embodiments, single shot sensing can be introduced with conventional resource reservation as illustrated in Fig. 7. Again, fast SCI decoding and resource selection (see sections 1.1 and 1.2) can be implemented to avoid collisions with ongoing transmission.

In detail, Fig. 7 shows in a diagram an occupation of resources of the wireless communication network during a sensing window 120 of the single shot sensing based on which the transceiver determines a sensing information describing free resources and/or occupied resources in a following transmission window 122 (single shot sensing supported by resource reservation). Thereby, the ordinate denotes the sub-channels and the abscissa the slots.

As indicated in Fig. 7, the sidelink control information 127_1-127_5 transmitted, e.g., at a beginning of a respective slot 125_1-125_1 signals resources that are reserved by a transceiver of the wireless communication system. For example, the sidelink control information 127_1 transmitted in slot 125_1 signals that resources 130_1 (R1) are reserved, wherein the sidelink control information 127_2 transmitted in slot 125_2 signals that resources 130_2 (R2) are reserved, wherein the sidelink control information 127_3 transmitted in slot 125_3 signals that resources 130_3 (R3) are reserved, wherein the sidelink control information 127_4 transmitted in slot 125_4 signals that resources 130_4 (R4) are reserved, and wherein the sidelink control information 127_5 transmitted in slot 125_5 signals that resources 130_5 (R5) are reserved.

The reservations 130_1 (R1), 120_4 (R4) and 130_5 (R5) demonstrate certain corner cases. The reserved resources of 130_1 (R1) are located in the first slot after sensing. Since 130_1 (R1) fully utilizes the window size W and the slots with the transmission of the reservation data and the resource occupation must be within W=5, sensing must start W-1 slots in advance.

The reservation 130_4 (R4) is sent in the last slot of the sensing window. Thus, the latest resource occupation is W-1 slots later. After this point all resources are potentially free since no reservation can exist. However, if the UE intends to transmit there sensing should be prolonged up to this point. Otherwise, ongoing transmission can start in between causing collisions.

### 3. Further Embodiments

V2X mode 2 sidelink resource selection is based on sensing. Conventionally, it is done by RSSI and/or RSRP measurements. This is not sufficient for NR and thus is based on decoding of the control channel SCI and retrieving its information. Embodiments are based on one or a combination of at least two out of the following options:
- Fast SCI decoding and resource selection such that resources can be occupied in the next slot after sensing.
- Flexible resource shaping in time and frequency domain.
- Look-ahead information about the resource occupation in the future.
- Short time span W where a resource reservation and corresponding reserved resources must occur.
- Support resource selection without resource reservation.
This enables a very dynamic resource selection that does not need continuous sensing. Rather a power saving single shot sensing is sufficient to obtain accurate information about the resource occupation in the near future. According to above described exemplary embodiment 1, i.e. without reservation, each UE has to compete for a new resource if it wants to transmit. This ensures most efficient resources utilization.

Embodiments described herein provide one or more of the following benefits:
- low latency,
- power saving,
- inherent frequency hopping,
- improved (e.g., best) resource utilization (e.g., no un-used reservations, no bandwidth fragmentation due to mismatching periodicity), and
- reduced (e.g., lowest possible) collision probability.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

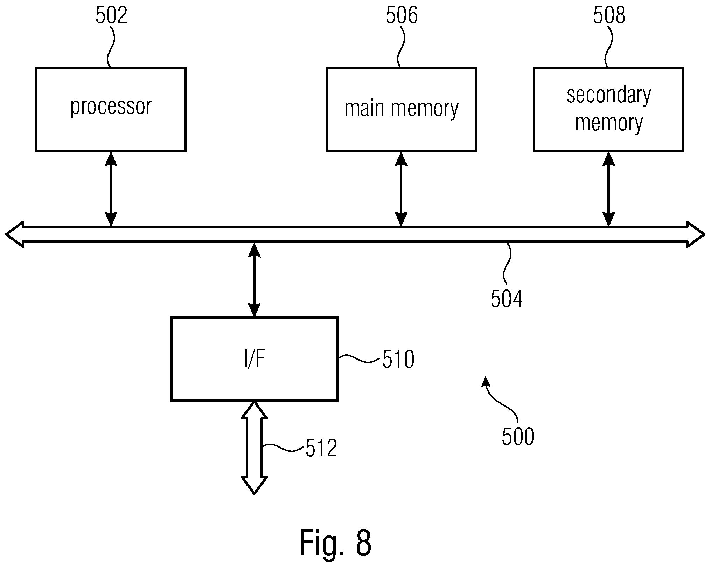

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 8 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### Abbreviations

- CQI: Channel Quality Indicator
- CSI-RS: Channel State Information- Reference Signal
- DRX: Discontinuous reception
- HARQ: Hybrid Automatic Repeat Request
- MCR: Minimum Communication Range
- NACK: Negative Acknowledgement
- NR: New radio
- PSFCH: Physical Sidelink Feedback Channel
- P-UE: Pedestrian UE: should not be limited to pedestrians, but represents any UE with a need to save power, e.g. electrical cars, cyclists,
- TB: Transport block
- V2X: Vehicle to anything
- VRU: Vulnerable road user
- V-UE: Vehicular UE

### References

[1] Final Report of 3GPP TSG RAN WG1 #99 v1.0.0, Reno, USA, 18th - 22nd November 2019
[2] Sidelink Resource Allocation Mechanism for NR V2X, Qualcomm Incorporated, R1-2000963, 3GPP TSG RAN WG1 Meeting #100-e
[3] TS 38.213, Physical layer procedures for control (Release 16)
[4] TS 38.214, Physical layer procedures for data (Release 16)

## Claims

1. Transceiver of a wireless communication system,
wherein the transceiver is configured to operate in a sidelink in-coverage, out of coverage or partial coverage scenario, in which resources for a sidelink communication are pre-configured by the wireless communication system or allocated or scheduled autonomously by the transceiver,
wherein the transceiver is configured to perform a single-shot-sensing on resources of the sidelink prior to a sidelink transmission to another transceiver or multiple other transceivers of the wireless communication system, in order to obtain a sensing information,
wherein the transceiver is configured to determine, for said sidelink transmission, a set of candidate resources out of the resources of the sidelink based on the sensing information,
wherein the transceiver is configured to select, for said sidelink transmission, resources out of the set of candidate resources and to perform said sidelink transmission using the selected resources,
wherein the resources of the sidelink are accessed in the time domain on a slot basis,
wherein the transceiver is configured to select the resources out of the set of candidate resources for said sidelink transmission and to be ready to perform said sidelink transmission until an end of a last occurring slot of a sensing window used for said single-shot-sensing.

2. Transceiver according to claim 1,
wherein the sensing window of the single-shot-sensing extends over a single slot.

3. Transceiver according to claim 1,
wherein the sensing window of the single-shot-sensing extends over a plurality of slots immediately following each other.

4. Transceiver according to one of the preceding claims,
wherein the transceiver is configured to start the sidelink transmission in a slot immediately following the last slot of the sensing window.

5. Transceiver according to one of the preceding claims,
wherein the set of candidate resources lay within a transmission window,
wherein a first occurring slot of the transmission window immediately follows the last slot of the sensing window.

6. Transceiver according to claim 5,
wherein the transmission window extends over a single slot.

7. Transceiver according to claim 5,
wherein the transmission window extends over a plurality of slots immediately following each other.

8. Transceiver according to one of the claims 5 to 7,
wherein the sensing information obtained by performing the single-shot-sensing completely describes all resources of the transmission window that are reserved by other transceivers of the wireless communication network.

9. Transceiver according to one of the preceding claims,
wherein the transceiver is configured to perform the single-shot-sensing by means of receiving and decoding sidelink control information transmitted by other transceivers of the wireless communication network in the slots of the sensing window.

10. Transceiver according to claim 9,
wherein the sidelink control information transmitted in a respective slot comprises a resource occupation signaling information signaling slots immediately following the respective slot that are occupied by another transceiver of the wireless communication system.

11. Transceiver according to one of the claims 9 to 10,
wherein the sidelink control information transmitted in a respective slot comprises a resource reservation signaling information signaling slots and/or sub-channels reserved by another transceiver of the wireless communication system.

12. Transceiver according to one of the claim 9 to 11,
wherein the transceiver is configured to complete the decoding of the sidelink control information until the end of the last occurring slot of the sensing window.

13. Transceiver according to claim 12,
wherein the transceiver is configured to exploit a fast decoding of the sidelink control information transmitted by one or more other transceivers of the wireless communication network decoding, such that the decoding of the sidelink control information is completed until the end of the last occurring slot of the sensing window.

14. Transceiver according to one of the preceding claims,
wherein the transceiver is configured to perform at least one out of
- the single-shot-sensing,
- the determining the set of candidate resources, and
- the selecting of the resources out of the candidate resources in a physical layer.

15. Transceiver according to one of the preceding claims,
wherein the set of candidate resources are a set of candidate resource blocks, wherein the selected resources are selected resources blocks, each resource block being defined as a single slot in the time domain and a single sub-channel in the frequency domain.

16. Transceiver according to claim 15,
wherein the transceiver is configured to select, for said sidelink transmission, the resource blocks out of the set of candidate resource blocks dynamically in dependence on the set of candidate resource blocks and a data size of said sidelink transmission, such that the selected resource blocks are distributed over both, two or more slots in the time domain and two or more sub-channels in the frequency domain.

17. Transceiver according to one of claims 15 to 16,
wherein the transceiver is configured to transmit, when transmitting the sidelink transmission, a resource occupation signaling information in each slot that is occupied by the selected resources, the resource occupation signaling information signaling a number of immediately subsequent slots in the time domain that are also occupied by the selected resources.

18. Transceiver according to claim 17,
wherein the transceiver is configured to transmit the resource occupation signaling information via the sidelink control information.

19. Transceiver according to one of the preceding claims,
wherein the transceiver is a UE.

20. Transceiver according to one of the preceding claims,
wherein the transceiver is battery operated.

21. Method for operating a transceiver of a wireless communication system, the method comprising:
operating the transceiver in a sidelink in-coverage, out of coverage or partial coverage scenario, in which resources for a sidelink communication are pre-configured by the wireless communication system or allocated or scheduled autonomously by the transceiver,
performing a single-shot-sensing on resources of the sidelink prior to a sidelink transmission to another transceiver of the wireless communication system, in order to obtain a sensing information,
determining, for said sidelink transmission, a set of candidate resources out of the resources of the sidelink based on the sensing information,
selecting, for said sidelink transmission, resources out of the set of candidate resources and to perform said sidelink transmission using the selected resources,
wherein the resources of the sidelink are accessed in the time domain on a slot basis,
wherein the resources are selected out of the set of candidate resources for said sidelink transmission and the transceiver is ready to perform said sidelink transmission until an end of a last occurring slot of a sensing window used for said single-shot-sensing.

22. Computer program for performing the method according to claim 21, when the computer program runs on a computer, microprocessor or software defined radio.

23. Algorithm for performing the method according to claim 21, when the algorithm runs on a dedicated hardware, hardware accelerator or configurable hardware.
